# EUROPEAN PATENT SPECIFICATION

(11) **EP 1 289 363 B1**
(45) Date of publication and mention of the grant of the patent: **30.06.2004**
(21) Application number: 01936691.3
(22) Date of filing: 16.05.2001
(51) Int. Cl.: A01N 25/34

(54) **SUSTAINED RELEASE COMPOSITION COMPRISING AN ACTIVE AGENT IN A PLASTIC CARRIER AND SHAPED ARTICLES MADE THEREFROM**
ZUSAMMENSETZUNG MIT VERZÖGERTER FREISETZUNG ENTHALTEND EINEN WIRKSTOFF IN EINEM PLASTISCHEN TRÄGER SOWIE DARAUS HERGESTELLTE FORMKÖRPER
COMPOSITION A LIBERATION LENTE CONTENANT UN PRINCIPE ACTIF DANS UN SUPPORT EN PLASTIQUE, ET ARTICLES FORMES OBTENUS A PARTIR DE LADITE COMPOSITION

(30) Priority: 18.05.2000 HU 0001959; 29.05.2000 HU 0000159 U; 13.12.2000 HU 0000354 U
(43) Date of publication of application: 12.03.2003
(73) Proprietor: Rozsa, Laszlo, 3516 Miskolc (HU); Marossy, Kalman, 3700 Kazincbarcika (HU); Honti, Eva, 1156 Budapest (HU); Szegö, Andras, 1088 Budapest (HU); Néder, Andras, 2040 Budaörs (HU)
(72) Inventor: Rozsa, Laszlo, 3516 Miskolc (HU); Marossy, Kalman, 3700 Kazincbarcika (HU); Honti, Eva, 1156 Budapest (HU); Szegö, Andras, 1088 Budapest (HU); Néder, Andras, 2040 Budaörs (HU)
(74) Representative: Beszédes, Stephan G., Dr.
(86) International application number: PCT/HU2001/000056
(87) International publication number: WO 2001/087065

(56) References cited:
- EP-A- 0 539 295
- DD-A- 72 938
- GB-A- 2 053 685
- US-A- 3 608 062
- US-A- 3 904 746
- US-A- 3 932 612
- US-A- 4 543 247
- US-A- 4 879 117
- DATABASE WPI Week 198626 Derwent Publications Ltd., London, GB; AN 1986-164020 XP002176073 & HU 38 202 A (ROZSA L), 28 May 1986 (1986-05-28)
- DATABASE WPI Week 198905 Derwent Publications Ltd., London, GB; AN 1989-035228 XP002176074 & JP 63 307801 A (DAIICHI YAKUKA KOGY), 15 December 1988 (1988-12-15)

## Description

The invention relates to a sustained release composition comprising an active agent in a plastic carrier. More particularly, the invention relates to a composition wherein the active agent is an insecticide, an insect-repellent agent, an agent for animal care or any combination thereof. The invention also relates to shaped articles made from the composition according to the invention; primarily to shaped articles for combatting insect pests or for use in animal care. The term "insect", whenever used in the description and claims, encompasses all kinds of invertebrate nonmicrobial parasites, such as worms and mites, too; consequently anthelmintic agents, acaricides and agents for combatting other invertebrate nonmicrobial pests are also embraced by the term "insecticide".

Insecticidal agents can be presented and used in a number of formulations. Dusting powders represent the oldest type of such formulations, which have an extended use for plant protection, animal husbandry and public health purposes. The use of dusting powders has, however, the disadvantage that warm-blooded animals contact suddenly with a relatively great amount of active agent, which may cause detrimental effects. The powdery carrier may also affect the skin and hair of domestic animals treated with dusting powders. Moreover, it is difficult to apply a dusting powder at an even rate onto the animal body, and losses may occur due to inadequate adherence to the hair.

Insecticides may also be presented as aerosols, which are sprayed usually into the environment of humans and domestic animals to make the environment insect free. Aerosol formulations are highly expensive, and their propellant component may cause serious environmental pollution problems. As another disadvantage, such formulations have a rather short duration of effect, because there is no continuous active agent supply. Aerosol formulations can also be sprayed directly to the animals in order to protect them from insects. This way of use is, however, less advantageous, since it is difficult to apply the formulation onto the animal body at an even rate, and the formulation can easily get into the mouth or eye, which is highly undesirable.

As an alternative, insecticides may also be combined with plastic materials. Such formulations are disclosed e.g. in Spanish Patent No. 374,910, French Patent No. 1,404,681 and German Patent No. 2,449,220. When used to protect domestic animals, particularly pets, from insects, generally a collar is made from the combination, which is placed onto the neck of the animal. The active agent is released from the combination by diffusion over a prolonged period of time. Although this solution has numerous advantages over the use of dusting powders or aerosols, it has certain disadvantages which result just from the fact that the active agent is released by diffusion. This involves that the release of the active agent is continuous, and the concentration of the active agent decreases exponentially in the function of time. Consequently, the amount of active agent which accumulates on the surface of the combination is not constant in time, but is initially high (it may sometimes reach a risky level), and drops then relatively quickly to an ineffective level. Since diffusion proceeds with no regard to the fact whether the combination is actually used or not, it may well occur that the combination releases most of its active agent content upon a prolonged storage, rendering thereby the combination ineffective. This happens primarily when the active agent of the combination is volatile.

In US Patent 4,543,247, Example 9, it has been described a composition which has been prepared from a solution of thermoplastic polyurethane, isopropylmyristate and propoxur in N-methylpyrrolidone and methylethylketone, the two latter being eventually evaporated. However, no data are available showing that propoxur is at least 10 times more soluble in isopropylmyristate than in the thermoplastic polyurethane used in said Example 9 and that this polymer is incompatible with the myristate.

From US Patent 4,879,117 it has been known a collar with a specific design; the increased liberation rate of the active agent is attained by this specific design. This document mentions that plasticizers may enhance active agent liberation, but does not give other details on it. Plasticizers are substances necessarily highly compatible with the polymer matrix.

European Patent Application 539 295 A1 relates to a composition wherein an insecticidal active agent has been embedded into a polymer matrix. The composition also comprises a liquid plasticizer, which should be highly miscible with the polymer (page 2, line 21), which means high compatibility (page 2, line 46). A fourth component of the composition is triphenyl phosphate which serves as carrier for the active agent, and is incompatible with the polymer (page 2, line 45), assisting thereby the liberation of the active agent. However, this incompatible substance is a solid, thus it cannot act as an incompatible liquid. Thus the control of the diffusion is achieved by a solid component. The relative compatibility of the various components is not discussed.

Our aim has been to eliminate these disadvantages.

Our invention is based on the recognition that when a polymer-based system comprises a component which is incompatible with said polymer, this component migrates onto the surface, whereas the other substances present in the system distribute between the polymer and the incompatible component according to their solubility conditions. Thus when an active agent is well soluble in the incompatible component but only sparingly soluble or even insoluble in the polymer, and the polymer is less soluble in the incompatible liquid that the active agent, the active agent will reach the surface of the system together with the migrating incompatible component. Migration stops, however, as soon as the amount of the migrating incompatible component with the active agent dissolved therein reaches a constant value determined by the physico-chemical parameters of the incompatible component and of the polymer. Thus if the active agent, together with the migrating incompatible liquid, is not removed from the surface, its amount on the surface will remain constant (this constant value is termed in the following also as "unit concentration"). If, however, the active agent is removed from the surface, e.g. either by evaporation or upon rubbing to the hair of the animal, migration sets in again, and continues until the amount of the active agent on the surface retires to the unit concentration. In this way it can be assured that the amount of active agent accumulated on the surface is constant in time, and premature release of active agent during storage can be avoided or at least considerably slowed down. This enables one to prepare polymer-based compositions and shaped articles with sustained and uniform active agent release and excellent storability.

Based on the above, the invention relates to a sustained release composition containing an active agent in a plastic carrier, which comprises
(a) at least one member selected from the group consisting of
   - 1-30 % by weight of an insecticide,
   - 0.1 - 20 % by weight of an insect repellent agent, and
   - 0.1 - 20 % by weight of an agent for animal care,
   with the proviso that the total amount of component (a) does not exceed 30 % by weight,
(b) 50 - 95 % by weight of a thermoplastic polymer, and
(c) 1 - 22 % by weight of a liquid which is incompatible with component (b), components (a), (b) and (c) being selected so that the solubility of component (a) in component (c) is at least 10 times higher than the solubility of component (b) in component (c), component (a) is practically insoluble in component (b), and components (b) and (c) are chemically inert towards component (a),
(d) optionally together with one or more additives usable in polymer processing.

The invention also relates to shaped articles made from the above composition.

As it appears from the above, component (a) of the composition according to the invention is an insecticide, an insect repellent agent, an agent for animal care, or any combinations thereof.

Examples of the insecticides usable in the composition according to the invention are as follows: DDVP (dimethyl-dichloro-vinyl-phosphate), dipterex, permethrin, tetramethrin, piperonyl-but-oxide, lindene, chlordecon, bromodon, methoxychlor, morestan, endosulphan, toxaphen, carbaryl, pirimicarb, methiocarb, dioxacarb, promecarb, aminocarb, tetrachlorvinphos, bromophos, foxim, azidithion, diazinon, bartrin, biotermethrin, resmethrin, allethrin and any chemically compatible combination thereof. If a shaped article serving to protect animals from insects is to be produced from the composition according to the invention, it is preferred to use non-volatile insecticides with low tension; which enables that all, or at least the overwhelming portion, of the insecticide which accumulates on the surface by migration will be removed by contacting with the animal rather than by evaporation. However, if the shaped article is used so that it is in a continuous contact with the animal, which is true e.g. for a collar, volatile insecticides are equally suitable. DDVP is an example of volatile insecticides For safety reasons it is preferred to use insecticides with LD₅₀ exceeding 50 mg/kg.

The composition according to the invention may contain preferably 2-20 % by weight, particularly preferably 4-10 % by weight of an insecticide.

The composition according to the invention may also contain a combination of two or more insecticides. Combinations of tetramethrin, permethrin and piperonyl butoxide in weight ratios of from 1:2:3 to 1:8:6 are particularly suitable. It has been found, unexpectedly, that when such combinations are used, the insecticidal activity increases by 5 % and the duration of effect increases by 20 % compared to that observed on compositions which contain only one of the three insecticides in the same amount as that of the combination.

Of the insect repellent agents essential oils, such as eucalyptus oil, anise oil and citrus oil, furthermore camphor are to be mentioned. The composition according to the invention may also contain a combination of two or more insect repellent agents; furthermore insect repellent agents can also be combined with. one or more insecticides.

The composition according to the invention may contain preferably 0.5-10 % by weight, particularly preferably 1-8 % by weight of an insect repellent agent.

Examples of the agents for animal care are agents for skin and/or hair care, such as topically applicable antiphlogistics, skin softeners, hair conditioning agents (such as mink oil), furthermore orally acting agents, such as appetizers. These latter may be used primarily when the composition is to be processed into shaped articles to be touched with mouth or bill, e.g. bone imitations for dogs or bill-sharpener toys for birds.

The composition according to the invention may contain preferably 0.5-10 % by weight, particularly preferably 1-8 % by weight of an agent for animal care.

Component (b) of the composition according to the invention is a thermoplastic polymer in which component (a) is sparingly soluble, i.e. practically insoluble, and which is chemically inert towards components (a) and (c). Examples of such thermoplastic polymers are as follows: polyolefins, such as polyethylene, polypropylene and copolymers thereof; terpolymers comprising these monomers (e.g. ethylene-propylene rubber, EPDM); thermoplastic and crosslinked polyurethanes; polyesters; furthermore various hard and softened PVC homo- and copolymers. As a general guide, any polymer (and any chemically compatible combination thereof) used before in plastic based compositions with sustained active agent release can be utilized, provided that they satisfy the requirements of chemical inertness and solubility conditions set forth before.

The composition according to the invention may contain preferably 55-75% by weight of component (b).

Component (c) of the composition according to the invention is a liquid which is incompatible with component (b). The term "incompatibility" means that although the liquid concerned can be admixed with the molten polymer without immediate segregation and forms a mixture with the polymer which can be processed by the usual methods of plastic processing, in the course of time it separates from the polymer and migrates onto the surface of the article made therefrom. As "compatibility" means thermodynamically that the change in free energy of admixing (ΔG) lis negative, those liquids can be regarded as incompatible for which ΔG exceeds zero. Incompatible liquids usable for the purpose of the invention must also meet the solubility requirements set forth above. Characteristic representatives of such incompatible liquids for use in combination with polar polymers (e.g. PVC, polyurethanes) are liquid paraffin and naphthene hydrocarbons, chlorinated paraffin hydrocarbons, esters of alcohols of at least 15 carbon atoms, partial esters of polyols, silicon oils, furthermore some known PVC plasticizers with low compatibility, such as triethylene glycol di-(2-ethyl-hexanoate) and 2,2,4-trimethyl-pentane-1,3-diol di-isobutyrate. Preferred representatives of incompatible liquids for use in combination with PVC are paraffin and naphthene hydrocarbons of 12-40 carbon atoms and their chlorinated derivatives with a chlorine content of 20-40 % by weight. If the active agent is near to being compatible with PVC (this is the case for DDVP), it is preferred to use as incompatible liquid a solvent for the active agent with the lowest possible polarity. Characteristic representatives of incompatible liquids for use in combination with apolar polymers (e.g. polyolefins) are esters, mono- and polyhydroxylic alcohols, polyglycols and ketones of higher chain length. One skilled in the art can easily select incompatible liquids for the various polymers mentioned above. Mixtures of incompatible liquids can also be used. Of course, the incompatible liquid should meet the requirements of chemical inertness and active agent dissolving ability set forth above.

The composition according to the invention may comprise component (c) preferably in an amount of 2-10 % by weight. If the incompatible liquid is an incompatible plasticizer for the polymer concerned, its preferred amount is somewhat higher, e.g. 4-15 % by weight.

The compositions according to the invention may also comprise one or more further additives which are conventionally used in polymer processing. Although the presence of such further additives is not obligatory, the compositions preferably do contain at least one of them, since they assist processability. Examples of these further additives with their usual upper concentrations are given below:
- plasticizers, such as phthalate esters with medium chain length, esters of aliphatic dicarboxylic acids, etc., in amounts of up to 35 % by weight;
- heat stabilizers, such as Ca-Zn soaps and co-stabilizers, such as epoxidized soybean oil, in amounts of up to 5 %;
- lubricants, such as montane wax, paraffin waxes, stearic acid, etc. in amounts of up to 1 % by weight;
- pigments and colourants in amounts of up to 1 % by weight.

The compositions according to the invention are prepared preferably in such a way that the polymer or a homogenized mixture of the polymer and the other additives is heated to 60-200°C, a pre-formed solution of component (a) in component (c) is added to the mixture, the resulting mass is homogenized and is optionally heated to a further period of time, and then it is processed by conventional plastic processing techniques, e.g. by extrusion, pressing, casting or injection moulding, or is allowed to cool and granulated. Of course these granules can also be processed further by conventional techniques.

As it has been mentioned before, the invention also relates to shaped articles made from the composition according to the invention. Such shaped articles may be the direct products of the plastic processing step mentioned above, or may be prepared from preformed granules by conventional plastic processing techniques. Thus e.g. sheets, strips, collars, discs, bone imitations, cylinders, saw-toothed or dentate articles (such as comb and brush heads) and the like can be prepared.

Considering that migration increases with the increase of the surface, which involves a parallel increase in the unit concentration of active agent appearing on the surface, sometimes it is desirable to increase the specific surface area of the shaped article. This can be done by producing the article with corrugated, saw-toothed, dentated or otherwise roughened surface. When moulds and punches of appropriate shape are used, articles with roughened surface may be obtained directly, or their surface can be roughened in a subsequent step by appropriate means (such as cutting, carving, gravouring, rastering, riffling, etc.). A very effective means of obtaining shaped articles with increased specific surface area is to apply the composition according to the invention onto a surface in the form of teeth, rods, fibres or similar thin, elongated objects. The surface onto which these thin elongated objects are applied may be made of the composition according to the invention, but it may also be made of another material. The thin, elongated objects are applied onto the surface by any convenient means, such as by plastic processing methods like injection moulding, or by electrostatic spraying.

Thus, the duration of effect can be adjusted by the appropriate selection of the specific surface area of the shaped article, which involves that articles with highly different duration of effect can be produced from one and the same composition. This is a particular advantage of the invention.

As it appears from the above, shaped articles according to the invention can also be presented in supported form, i.e. in a form where the shaped article made of the composition according to the invention is combined with a support. This support may be made of any conventional material, such as of textile, paper, cardboard, wood, metal, plastic, etc. or any combination thereof. In order to prevent undue losses of active agent, the material of the support is selected preferably so that it does not adsorb the active agent migrated onto the surface of the shaped plastic composition. These non-adsorbing supports are termed in the following as "inert supports".

Furthermore, if desired, one or more members of component (a) in fast-acting form (i.e. either as such or in the form of a non sustained release composition) can also be applied onto the surface or onto a part of the surface of the shaped article according to the invention. Such combinations are used preferably when component (a) in fast-acting form is an insecticide, and the shaped article according to the invention is to be used on highly infested areas or where the risk of infestation is very high. In such instances a quick booster insect killing effect is provided for by the insecticide in fast-acting form, whereas the continuous supply of active agent and the maintenance of the effect is provided for by the composition according to the invention. The insecticide in fast-acting form may be preferably a volatile insecticide (e.g. DDVP) either as such or in the form of a non sustained-release formulation.

Characteristic representatives of shaped articles with or whithout a support are as follows:
(1) Strips and sheets made of the composition according to the invention to be placed on the path where insects (like ants, cockroaches, etc.) move. These articles contain as component (a) an insecticide, an insect-repellent agent or a combination thereof, and are preferably supported on an adhesive tape which enables correct position and fixing. The sheets or strips may be coated on their upper side with an insecticide in fast-acting form. Such sheets or strips can also be placed on or in the habitat of animals, such as bird cages, cat baskets, dog houses, stables, etc.
(2) Shaped articles to be worn continuously by animals, such as collars, ear-tags (crotariae) and the like.
(3) Shaped articles to be used occasionally by the animal itself, such as bone imitations and other toys for dogs, bill sharpeners, swings and other toys for birds, claw abraders, climbing rods and other toys for cats, etc.
   The articles discussed in points (2) and (3) above may also be produced in supported form; sometimes the support may be present as a core. Like the strips and sheets discussed in point (1), these shaped articles may also be coated on one or more side with an insecticide or insect-repellent agent in fast-acting form. The insecticide or insect-repellent agent in fast-acting form may also be applied onto the support. An example of this latter embodiment is a collar with a felt cover on one side, where the felt is impregnated with a volatile insecticide. Further details on the production of collars can be found in the patents cited before. When the shaped articles are ones to be touched with mouth or bill, some characteristic members of which are listed in point (3), specific care should be taken on the toxicity of the insecticide present. These articles preferably do not have fast-acting insecticide coating, and are made of compositions comprising an insecticide with LD₅₀ above (sometimes much above) 1000 mg/kg. On the other hand, the compositions used to prepare such articles may also comprise orally actig agents, such as appetizers, as component (a), or such agents can be applied onto their surface in fast-acting form.
(4) Shaped articles to be used periodically by the animal keeper (including breeder, tender and husbandman) for animal care purposes. Shaped articles of this type are particularly advantageous, and form a further specific aspect of the invention. Such shaped articles are articles for manual use made from the composition according to the invention (termed in the following also as "plastic body"); which may . optionally be mounted onto a support for manual operation. Preferred representatives of these latter supported articles are those where the plastic body is releasably mounted onto the support, so that when the active agent content of the plastic body has dropped to a low level or to zero, the exhausted plastic body can easily be removed from the support and replaced by a fresh one. Like the other shaped articles mentioned before, shaped articles of this type can also be coated with active agent (a) in fast-acting form, if desired.

Shaped articles of this type have numerous advantages over those mentioned in points (2) and (3) above. Shaped articles to be worn continuously by animals in a fixed position, such as collars, have the disadvantage that they contact only with a well-defined restricted part of the animal body (for collars, with the neck of the animals), thus they exert their action only at the area of contact and at its close surroundings. For insecticides this involves that only those insects are killed which are present at or move to the area of contact, and no effect is exerted against insects prevailing on other parts of the animal body. Furthermore, as collars and related articles get continuously rubbed with the hair of the animal, they release their active agent content continuously, with no regard to that whether there are insects to be killed on the area of contact or this area is insect-free. This leads to undue losses in active agent content. Shaped articles to be used occasionally by the animal have the disadvantage that the release of active agent content is regulated primarily by the animal itself, which may lead to inadequate active agent release. These disadvantages can fully be avoided with shaped articles to be used manually by the keeper. With such articles the active agent can be applied onto the whole body of the animal (or onto the parts which require particular care) at a uniform and effective rate which is harmless to the animal simply in such a way that the keeper wipes or strokes the body of the animal or combs or brushes the animal's hair with the shaped article according to the invention. This treatment, which is very pleasant to the animal and also improves the keeper/animal contact, can be repeated with the required frequency; the latter being dependent on factors well known to one skilled in the art, such as size, age and general condition of the animal, type and severity of infestation, type and activity of the active agent concerned, etc. When the active agent is a non-volatile one, no loss of active agent occurs upon storing the shaped article between two treatments, since once the active agent, migrated onto the surface together with the incompatible liquid, has accumulated on the surface in the unit concentration and is not removed by wiping, migration stops. When the active agent is volatile, some loss may occur during storage due to evaporation, the extent of such a loss is, however, much less than that occurring upon diffusion-controlled release. A further advantage of the use of such shaped articles is that insecticidal treatment and hair and skin care treatment can be performed in a single step.

Specific embodiments of shaped articles belonging to the type mentioned in point (4) above are illustrated in the accompanying drawings, of which
Fig. 1 shows a manually operable plastic body which is a block or sheet 1 of smooth surface;
Fig. 2 shows a manually operable plastic body which is a block or sheet 1 with teeth 2 on one side;
Fig. 3 shows a manually operable plastic body which is a block or sheet 1 with roughenings 3 on one side;
Fig. 4 shows a manually operable plastic body as shown in Fig. 1, provided with a releasable support 4 also serving for suspending the plastic body; said support 4 may be e.g. a lace or a band;
Fig. 5 shows a manually operable plastic body 1 as shown in Fig. 1, supported by a glove 5;
Fig. 6 is a sectional view of a comb, where a hollow cylindrical plastic body 6 with teeth 2 is releasably connected to handle 7; and
Fig. 7 is a sectional view of a brush, where a hollow cylindrical plastic body 6 with roughenings 3 on its surface is releasably connected to handle 7.

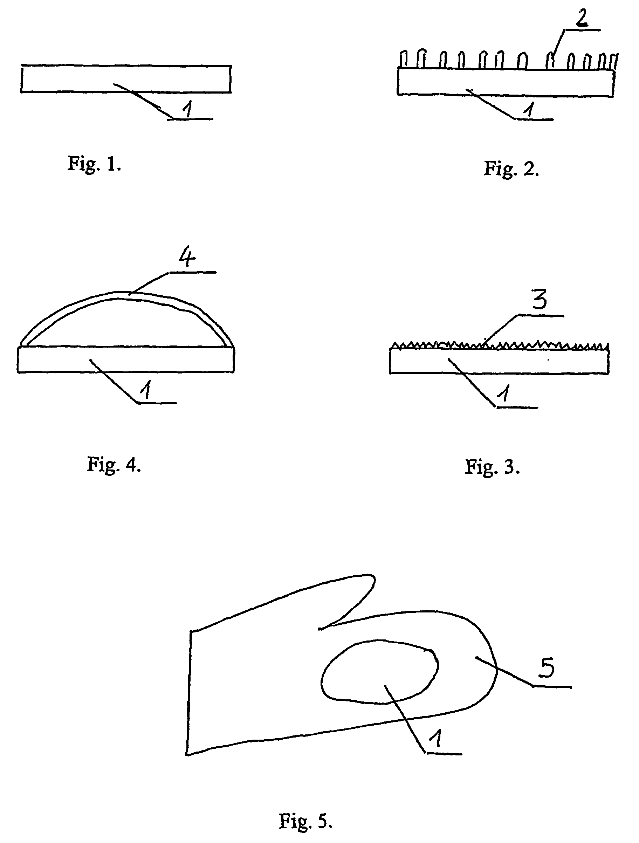

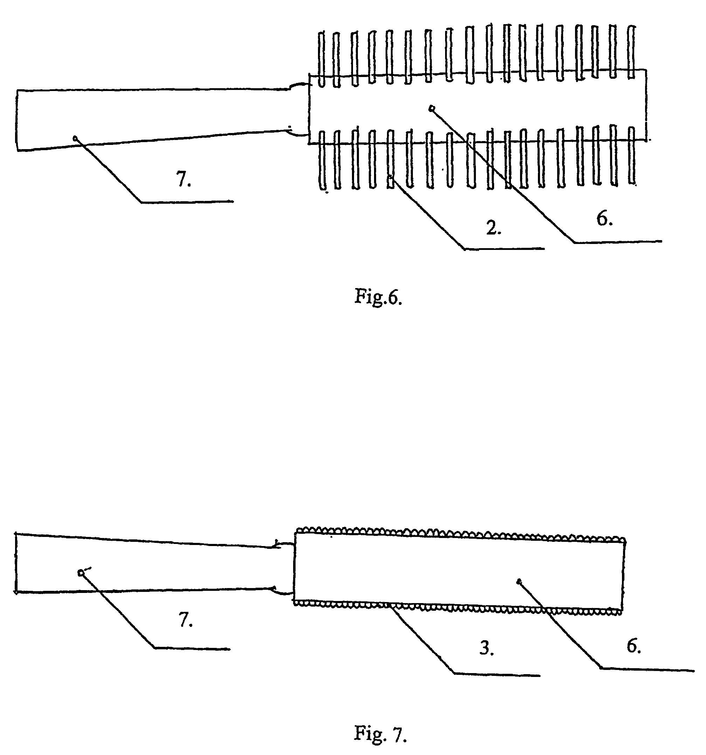

The embodiments shown in the figures serve only for illustration, and the scope of manually operable, optionally supported shaped articles is by no means restricted to them. Numerous variations of the illustrated articles may exist, without departing from the spirit of the invention. Thus, e.g. the plastic body supported by a glove (see Fig. 5) may also be one with corrugated, dentated, saw-toothed or otherwise roughened surface; the comb shown in Fig. 6 may also be one with a single row of teeth or one with multiple rows of teeth along the cylinder surface; etc. Such variations and modifications are also embraced by the scope of the invention.

For the treatment of animals with long hair, such as Angora cats, Labradors or Hungarian shepherd dogs (pulis or comondors), it is preferred to use articles with dentate surfaces (comb-like articles), whereas for the treatment of animals with short hair, such as Siamese cats, beagle dogs, goldhamsters or guinea pigs, it is preferred to use articles with smooth or roughened surfaces (kerchief-like or brush-like articles).

As it is well known in connection with shaped articles for animal care known before, the size and active agent content of such shaped articles for manual operation should always be matched to the size, age and body weight of the animal to be treated.

Further details of the invention are illustrated by the aid of the following nonlimiting Examples.

### Example 1

10 000 g of K-64 suspension type PVC resin (a commercially available product), 1600 g of di-(2-ethyl-hexyl) phthalate as plasticizer, 3500 g of dioctyl adipate as plasticizer, 200 g of a Ca-Zn soap (sold under trade name Reagens AC/0 by Reagens Co.) as stabilizer, 300 g of epoxidized soybean oil as costabilizer, 30 g of montane wax as lubricant and 40 g of a brown pigment (sold under trade name Microlith Braun 5R-KP by CIBA) were weighed into a fluid mixer 50 litres in capacity, and the content of the mixer was heated to 80°C under continuous mixing. A mixture of 400 g of paraffine oil and 1230 g of DDVP was added to the mass, and heating and mixing was continued until the temperature of the mass raised to 115°C. The resulting mass was cooled to 60°C, and then granules were formed from tthe mass on a two-screw extrusion granulating machine.

The following shaped articles were prepared from the above granulate:

### 1.1. Strip:

A 0.5 mm thick, 10 mm wide strip was formed from the granulate by extrusion, and a self-adhesive tape was adhered onto one side of the strip. The resulting strip can be used with good results against ants and cockroaches when adhered onto the pathway of move of the insects.

### 1.2. Comb:

Teeth were formed by injection moulding from the granulate on the surface of a pre-fabricated handle made of polypropylene. A comb was obtained, which is a variant of the embodiment shown in Fig. 6. This comb can be used for the treatment of animals with long hair.

### 1.3. Brush:

A cylindrical hollow body with rough surface was formed by injection moulding from the granulate, and the resulting brush head was pulled on a pre-fabricated handle made of polypropylene. A brush shown in Fig. 7 was obtained, which can be used for the treatment of animals with short hair.

### 1.4. Suspendable blocks:

A sheet of 4mm thickness was formed from the granulate by injection moulding. Rectangular blocks with a width of 40 mm and a length of 100 mm were cut from the sheet, and pre-fabricabed textile bands were adhered onto the blocks. Suspendable shaped articles with smooth surface as shown in Fig. 4 were obtained. When used for animal care, the body of the animal is stroken with the article.

### Example 2

Granules were prepared as described in Example 1 with the difference that only 840 g of DDVP were used as active agents. Thus the active agent content of the resulting granulate was 5 % by weight. Collars were formed from the resulting granulate as disclosed in German Patent No. 2,449,220. For comparison purposes, collars of the same active agent content were prepared from a plastic mass disclosed in the same patent. The freshly produced collars were placed onto the neck of 40 boxer dogs, each. At regular intervals, shown in Table 1, 10 of the collars, each, were removed, and their residual DDVP content was determined in a known way by gas chromatography.

The results are summarized in Table 1 below. The numerical data given in Table 1 are averages of 10 measurements, each.

**Table 1**

| | Active agent content of the collar, % by weight | |
|---|---|---|
| | Prepared from the composition according to the invention | Prepared from the composition according to DE 2,449,220 |
| Starting concentration | 5.0 | 5.0 |
| After 1 week | 4.5 | 4.2 |
| After 2 weeks | 4.1 | 3.5 |
| After 4 weeks | 3.3 | 2.3 |
| After 6 weeks | 2.8 | 1.3 |

The data of Table 1 clearly demonstrate that the collars made from the composition according to the invention release their active agent content within a prolonged period of time and with a more uniform rate than the collars made from the known composition.

Storage stability of the two types of collars was tested by keeping the collars in an open environment (temperature: 40°C, relative humidity:80 %) for 6 months and measuring then their residual active agent content as described above. For the collars made from the composition according to the invention the loss in active agent content was of 10-15 %, whereas for the collars made from the compo-sition disclosed in German Patent No. 2,449,220 the loss in active agent content was of 25-30 % (determined on 20 collars, each).

### Example 3

Granules were prepared as described in Example 1 with the difference that 1000 g of a 1: 5.5 : 4.6 w/w mixture of tetramethrin, permethrin and piperonyl butoxide were used as active agent. Thus the resulting granulate contained 0.55 % by weight of tetramethrin, 3.00 % by weight of permethrin and 2.55 % by weight of piperonyl butoxide.

The following shaped articles were prepared from the above granulate:

### 3.1. Collar:

3 mm thick, 600 mm long and 10 mm wide collars for dogs were prepared by injection moulding, using a mould of appropriate shape and dimensions.

### 3.2. Suspendable dentate block:

Suspendable dentate blocks were prepared essentially as disclosed in point 1.4. of Example 1, with the difference that, by using appropriately shaped moulds, rows of teeth were also formed on one side of the sheet. The blocks cut from the sheet had 8 vertical and 15 horizontal rows of teeth, each.

### 3.3. Brush:

Brushes were prepared essentially as disclosed in point 1.3. of Example 1, with the difference that, by using appropriately shaped moulds, the cylindrical hollow bodies were formed with parallel circular rows of saw-tooth shaped protrusions on their outer surface.

The above shaped articles were tested on three groups of 30 puddle dogs, each, heavily infested with fleas. In the first group freshly produced collars were placed onto the neck of the animals. At regular intervals, shown in Table 2, 10 of the collars were removed and their residual active agent content was determined. In the second group the dogs were combed once a day for 10 minutes with a dentate block according to point 3.2 above. Separate blocks were used for the treatment of the individual animals. At regular intervals, shown in Table 2, one row of teeth, each, was cut from the individual blocks, and the residual active agent content of the cut samples was determined. A similar methodology was used for the treatment of the third group of animals, but in this instance brushes according to point 3.3 above were used, and one row of circular saw-tooth shaped protrusion, each, was cut from the individual brush heads.

The supports were removed from the samples, thereafter the samples were comminuted, and a fixed amount (see below) of the comminuted material was weighed into a flask of 25 mm capacity. The flask was filled up to half-volume with the appropriate solvent mixture (see below), and sonicated for 15 minutes. Thereafter the flask was filled up to the mark with the same solvent mixture, sonicated again for 15 minutes, and allowed to stand overnight. Thereafter the samples were analyzed for the individual active agents by HPLC coupled to an UV detector of variable detection wavelength. The conditions of analysis, together with the conditions of sample preparation, are given below:
(a) Determination of tetramethrin and piperonyl butoxide content:
   weight of material: 0.5000 g
   solvent mixture: 85/15/1 w/w mixture of n-hexane, dichloromethane and dioxane
   column: LICHROSORB Si 60.5 µm; 250 mm x 4 mm;
   wavelength of detection: 230 nm;
   flow rate: 3.0 ml/min.
(b) Determination of permethrin content:
   weight of material: 0.1500 g
   solvent mixture: 85/15/0.15 w/w mixture of n-hexane, dichloromethane and dioxane
   column: LICHROSORB Si 60.5 µm; 250 mm x 4 mm;
   wavelength of detection: 220 nm;
   flow rate: 2.5 ml/min.

The results are shown in Table 2. In Table 2 the abbreviation PCRS means "percentage change related to the starting value".

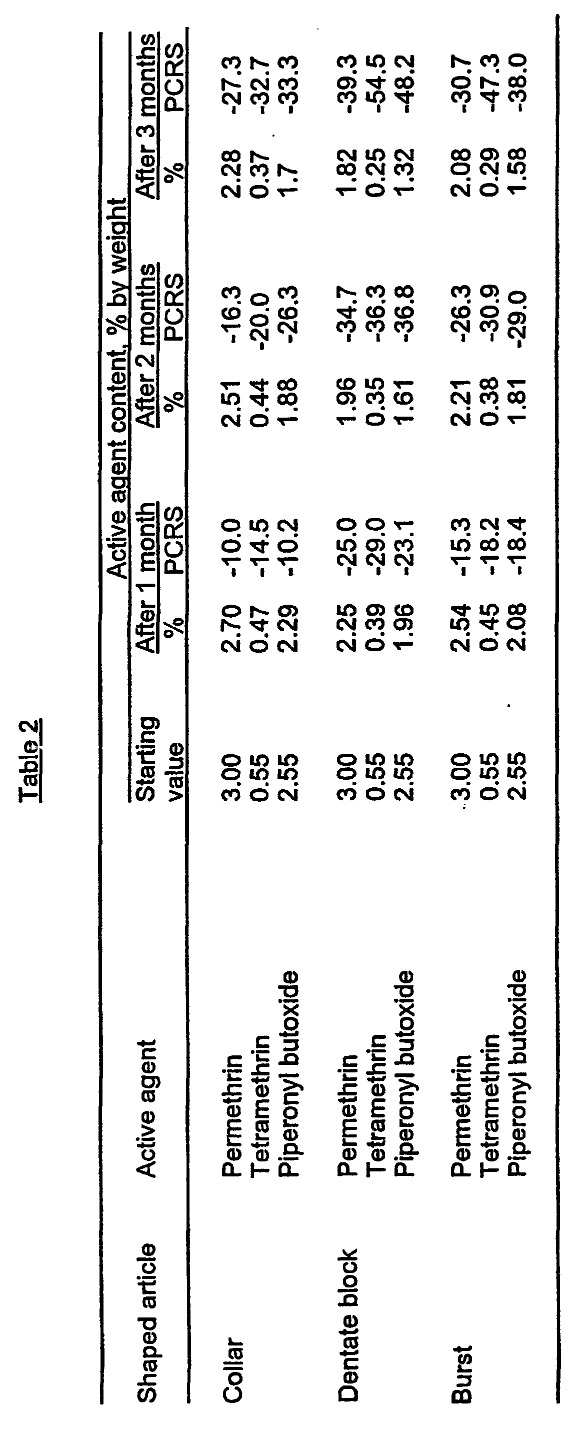

The data of Table 2 clearly demonstrate that the active agent releases faster from dentate blocks and brushes than from collars, which is a clear consequence of the increase in specific surface area. Thus, articles with different active agent releasing abilities can be prepared from one and the same composition by appropriately selecting the specific surface area of the shaped article made therefrom. During the test period it has also been observed that animals treated with dentate block or brush as described above attain the insect-free state within a shorter period of time than those wearing continuously a collar. This is a clear consequence of the fact that when using a manually operable article (for the present instance, a dentate block or brush) the active agent can be applied at an even rate onto the whole body of the animal, whereas collars act only at the neck portion of the animal.

Storage stability tests performed as given in Example 2 on the starting granulate and on the articles prepared therefrom have shown that no change in active agent content occurs after a storage of 6 months.

### Example 4

1000 g of a PVC resin as defined in Example 1, 470 g of di-(2-ethyl-hexyl) phthalate as plasticizer, 20 g of a Ca-Zn soap as defined in Example 1 as stabilizer, 30 g of epoxidized soybean oil as costabilizer, 3 g of montane wax as lubricant, 0.5 g of a heavy metal-free yellow pigment (sold by CIBA under trade name Cromophtal Gelb HRP), 25 g of mink oil and 30 g of eucalyptus oil were homogenized and then heated to 100°C under constant stirring. A mixture of 300 g of DDVP and 60 g of paraffine oil was added to the mass, and the mass was heated to a temperature of 150-200°C under constant stirring. The resulting mass was either cooled to 60°C and converted to granules as described in Example 1, or it was processed directly to collars by injection moulding as given in point 3.1 of Example 3.

Brushes can be prepared from the resulting granulate as described in point 1.3 of Example 1.

### Example 5

The procedure described in Example 1 was followed with the difference that tetramethrin was used as active agent instead of DDVP.

### Example 6

The procedure described in Example 1 was followed with the difference that permethrin was used as active agent instead of DDVP.

### Example 7

The procedure described in Example 1 was followed with the difference that camphor was used as active agent instead of DDVP.

### Example 8

The procedure described in Example 1 was followed with the difference that eucalyptus oil was used as active agent instead of DDVP.

### Example 9

The procedure described in Example 1 was followed with the difference that anise oil was used as active agent instead of DDVP.

### Example 10

The procedure described in Example 1 was followed with the difference that citrus oil was used as active agent instead of DDVP.

### Example 11

The procedure described in Example 1 was followed with the difference that a 1:4:6 w/w mixture of tetramethrin, permethrin and piperonyl butoxide was used as active agent instead of DDVP.

Rectangular blocks (length: 60 mm, width: 40 mm, thickness: 4 mm) were prepared from the resulting granulate as described in point 1.4 of Example 1, and the surface of the blocks was roughened by rastering. The resulting blocks were adhered onto the hand part of a glove to obtain manually operable supported articles as shown in Fig. 5.

### Example 12

The procedure described in Example 4 was followed with the difference that a 1:4:6 w/w mixture of tetramethrin, permethrin and piperonyl butoxide was used as active agent instead of DDVP.

Brushes were prepared from the resulting granulate as given in point 1.3 of Example 1. The prefabricated handle can also be made of aluminium.

### Example 13

1000 g of a PVC resin as defined in Example 1, 160 g of di-(2-ethyl-hexyl) phthalate as plasticizer, 350 g of dioctyl adipate as plasticizer, 20 g of a Ca-Zn soap as defined in Example 1 as stabilizer, 30 g of epoxidized soybean oil as costabilizer, 3 g of montane wax as lubricant, 40 g of paraffine oil, 30 g of anise oil, 30 g of mink oil and 123 g of a 1:4:6 w/w mixture of tetramethrin, permethrin and piperonyl butoxide were homogenized and then heated to 100-120°C under constant stirring. The resulting mass was allowed to cool to 60°C and converted to granules as described in Example 1.

Brushes were prepared from the resulting granulate as described in point 1.3 of Example 1.

### Example 14

The method described in Example 13 was followed with the difference that PVC was replaced by the same amount of a polyolefin elastomer sold byDSM under trade name Keltan.

Dentate blocks were prepared from the resulting granulate as described in point 3.2 of Example 3 with the difference that the thickness was adjusted to 8 mm, of which the height of teeth was 5 mm. The resulting blocks were adhered onto the hand part of a glove to obtain manually operable supported articles as shown in Fig. 5.

As an alternative, the resulting granules were processed into blocks with smooth surface as given in point 1.4 of Example 1. The resulting blocks were perforated for insertion of a lace serving as suspender. The resulting articles can be used as ear-tags or as toys for birds to be suspended in the cage.

### Example 15

1000 g of a thermoplastic polyurethane with a Shore A hardness of 60 (sold by BASF under trade name Elastolan C60AW) was admixed at 180°C with a pre-formed mixture of 50 g of paraffin oil and 70 g of a 1:3:5 w/w mixture of tetramethrin, permethrin and piperonyl butoxide. A sheet with a thickness of 3 mm was formed from the melt by rolling, and the resulting sheet was cut into strips 10 mm in width.

Fine polyacrylamide fibres, about 0.2-0.5 mm in length, were adhered to one side of the resulting strips by electrostatic spraying, and DDVP was applied onto the fibres in an amount of 0.05 g/cm². The resulting strips can be used for the production of collars for dogs.

As an alternative, a felt impregnated with DDVP can be adhered onto one side of the resulting strips.

The sheet produced as described above can also be cut into cubes which can be stored for further processing. These cubes can be processed very easily by injection moulding.

### Example 16

1000 g of a modified polypropylene-based thermoplastic elastomer (sold by Optatech Oy, Finland under trade name Pacrel) were admixed with 200 g of dodecyl phthalate. A pre-formed mixture of 50 g of paraffin oil and 70 g of tetramethrin was added. The mass was homogenized, allowed to stand for one day, and then processed into granules as given in Example 1.

The resulting granulate was processed by injection moulding at 180°C into brush heads as disclosed in point 1.3 of Example 1.

## Claims

1. A sustained release composition containing an active agent in a plastic carrier, which comprises
(a)
- 1-30 % by weight of an insecticide,
- 0.1 - 20 % by weight of an insect repellent agent, and/or
- 0.1 - 20 % by weight of an agent for animal care,
with the proviso that the total amount of component (a) does not exceed 30 % by weight,
(b) 50 - 95 % by weight of a thermoplastic polymer, and
(c) 1 - 22 % by weight of a liquid which is incompatible with component (b), components (a), (b) and (c) being selected so that the solubility of component (a) in component (c) is at least 10 times higher than the solubility of component (b) in component (c), component (a) is practically insoluble in component (b), and components (b) and (c) are chemically inert towards component (a),
(d) optionally together with one or more additives usable in polymer processing.

2. A composition as claimed in claim 1, in which the insecticide is an agent with LD₅₀ above 50 mg/kg.

3. A composition as claimed in claim 1 or 2, which comprises as insecticide DDVP, dipterex, permethrin, tetramethrin, piperonyl-butoxide, lindene, chlordecon, bromodon, methoxychlor, morestan, endosulphan, toxaphen, carbaryl, pirimicarb, methiocarb, dioxacarb, promecarb, aminocarb, tetrachlorvinphos, bromophos, foxim, azidithion, diazinon, bartrin, biotermethrin, resmethrin, allethrin, or any chemically compatible combination thereof.

4. A composition as claimed in any of claims 1 to 3, which comprises as insecticide a combination of tetramethrin, permethrin and piperonyl butoxide in a weight ratio of from 1:2:3 to 1:8:6.

5. A composition as claimed in any of claims 1-4, which comprises the insecticide in an amount of 4-20 % by weight.

6. A composition as claimed in claim 1, which comprises as insect repellent agent eucalyptus oil, anise oil, citrus oil, camphor or any combination thereof.

7. A composition as claimed in any of claims 1 and 6, which comprises the insect repellent agent in an amount of 0.5-10 % by weight.

8. A composition as claimed in claim 1, which comprises as agent for animal care a topically applicable antiphlogistic, a skin softener, a hair conditioning agent, an appetizer, or any chemically and biologically compatible combinations thereof.

9. A composition as claimed in claim 1 or 8, which comprises a hair conditioning agent, particularly mink oil, as agent for animal care.

10. A composition as claimed in any of claims 1, 8 and 9, which comprises the agent for animal care in an amount of 0.5-10 % by weight.

11. A composition as claimed in any of the preceding claims, which comprises as component (b) a polyolefin homo- co- or terpolymer, a styrene/butadiene co- or terpolymer, a polyurethane, a polyester, a PVC polymer or any chemically compatible combination thereof.

12. A composition as claimed in any of the preceding claims, which comprises component (b) in an amount of 55-75 % by weight.

13. A composition as claimed in any of the preceding claims, which comprises a polar polymer as component (b), and a liquid paraffin or naphthene hydrocarbon, a chlorinated paraffin hydrocarbon, an ester of an alcohol of at least 15 carbon atoms, a partial ester of a polyol, a silicon oil, a PVC plasticizer with low compatibility, or any mixture thereof as component (c).

14. A composition as claimed in claim 13, which comprises paraffin oil as component (c).

15. A composition as claimed in any of claims 1 to 12, which comprises an apolar polymer as component (b), and an ester, a mono- or polyhydroxylic alcohol, a polyglycol, a ketone of higher chain length or any mixture thereof as component (c).

16. A composition as claimed in any of the preceding claims, which comprises component (c) in an amount of 2-15 % by weight.

17. A shaped article made of a composition as claimed in any of claims 1-16.

18. A shaped article as claimed in claim 17, wherein at least a part of the surface of said article carries protrusions or other roughenings.

19. A shaped article as claimed in any of claims 17 and 18, in combination with a support.

20. A shaped article as claimed in claim 19, being removably combined with a support.

21. A shaped article as claimed in any of claims 19 and 20, wherein the support is made of a non-adsorbent material for component (a).

22. A shaped article as claimed in any of claims 17 to 21, wherein at least a part of the surface of said article carries one or more members of component (a) in fast-acting form.

23. A shaped article as claimed in claim 22, wherein component (a) in fast-acting form is an insecticide or a non sustained-release composition comprising an insecticide.

24. A shaped article as claimed in claim 23, wherein the insecticide is DDVP.

25. A shaped article as claimed in any of claims 17 to 24 presented as a manually operable article to be used periodically by an animal keeper.

26. A shaped article as claimed in claim 25 with a smooth surface.

27. A shaped article as claimed in claim 25 with a corrugated, saw-toothed, dentate, riffled, rastered or otherwise roughened surface.

28. A shaped article as claimed in claim 26 or 27, combined with a handle, a suspending means, a sheet, a strip or a glove as support.

29. A shaped article as claimed in claim 27 or 28, presented as a comb or as a brush.

30. A shaped article as claimed in any of claims 26 to 28, presented as a roll, slab or glove for stroking the animal's body.

## Patentansprüche

1. Zusammensetzung mit verzögerter Freisetzung, enthaltend einen Wirkstoff in einem Kunststoffträger, welcher folgendes umfasst:
(a)
- 1 bis 30 Gew.-% eines Insektizids,
- 0,1 bis 20 Gew.-% eines Insekten-Abwehrmittels und/oder
- 0,1 bis 20 Gew.-% eines Mittels zur Tierpflege,
mit der Maßgabe, dass die Gesamtmenge der Komponente (a) 30 Gew.-% nicht übersteigt,
(b) 50 bis 95 Gew.-% eines thermoplastischen Polymeren und
(c) 1 bis 22 Gew.-% einer Flüssigkeit, welche mit Komponente (b) inkompatibel ist, wobei die Komponenten (a), (b) und (c) so gewählt werden, dass die Löslichkeit der Komponente (a) in Komponente (c) mindestens 10 Mal höher ist als die Löslichkeit der Komponente (b) in der Komponente (c), die Komponente (a) praktisch in der Komponente (b) unlöslich ist und die Komponenten (b) und (c) chemisch inert bezüglich Komponente (a) sind,
(d) wahlweise zusammen mit einem oder mehreren Additiven, die bei der Polymerprozessierung brauchbar sind.

2. Zusammensetzung gemäß Anspruch 1, in der das Insektizid ein Mittel mit einem LD₅₀-Wert über 50 mg/kg ist.

3. Zusammensetzung gemäß Anspruch 1 oder 2, welches als Insektizid DDVP, Dipterex, Permethrin, Tetramethrin, Piperonylbutoxid, Linden, Chlordecon, Bromodon, Methoxychlor, Morestan, Endosulfan, Toxaphen, Carbaryl, Pirimicarb, Methiocarb, Dioxacarb, Promecarb, Aminocarb, Tetrachlorvinphos, Bromophos, Foxim, Azidithion, Diazinon, Bartrin, Biotermethrin, Resmethrin, Allethrin oder eine chemisch kompatible Kombination davon umfasst.

4. Zusammensetzung gemäß mindestens einem der Ansprüche 1 bis 3, welche als Insektizid eine Kombination von Tetramethrin, Permethrin und Piperonylbutoxid in einem Gewichtsverhältnis von 1:2:3 bis 1:8:6 umfasst.

5. Zusammensetzung gemäß mindestens einem der Ansprüche 1 bis 4, welche das Insektizid in einer Menge von 4 bis 20 Gew.-% umfasst.

6. Zusammensetzung gemäß Anspruch 1, welche als Insekten-Abwehrmittel Eukalyptusöl, Anisöl, Zitrusöl, Kampher oder eine beliebige Kombination davon umfasst.

7. Zusammensetzung gemäß mindestens einem der Ansprüche 1 und 6, welche das Insekten-Abwehrmittel in einer Menge von 0,5 bis 10 Gew.-% umfasst.

8. Zusammensetzung gemäß Anspruch 1, welche als Mittel zur Tierpflege ein topisch anwendbares Antiphlogistikum, einen Hautweichmacher, ein Haar-Konditioniermittel, einen Appetizer oder beliebige chemisch und biologisch kompatible Kombinationen davon umfasst.

9. Zusammensetzung gemäß Anspruch 1 oder 8, welche als ein Haar-Konditioniermittel insbesondere Nerzöl als Mittel zur Tierpflege umfasst:

10. Zusammensetzung gemäß mindestens einem der Ansprüche 1, 8 und 9, welche das Mittel zur Tierpflege in einer Menge von 0,5 bis 10 Gew.-% umfasst.

11. Zusammensetzung gemäß mindestens einem der vorstehenden Ansprüche, welche als Komponente (b) ein Polyolefin-Homo-, -Co- oder -Terpolymer, ein Styrol/Butadien-Cooder -Terpolymer, ein Polyurethan, einen Polyester, ein PVC-Polymer oder eine chemisch kompatible Kombination davon umfasst.

12. Zusammensetzung gemäß mindestens einem der vorhergehenden Ansprüche, welche die Komponente (b) in einer Menge von 55 bis 75 Gew.-% umfasst.

13. Zusammensetzung gemäß mindestens einem der vorhergehenden Ansprüche, welche ein polares Polymer als Komponente (b) und ein(en) flüssiges Paraffin oder Naphthenkohlenwasserstoff, einen chlorierten Paraffinkohlenwasserstoff, einen Ester eines Alkohols mit mindestens 15 Kohlenstoffatomen, einen partiellen Ester eines Polyols, ein Siliconöl, einen PVC-Weichmacher mit niedriger Kompatibilität oder eine beliebige Mischung davon als Komponente (c) umfasst.

14. Zusammensetzung gemäß Anspruch 13, welche Paraffinöl als Komponente (c) umfasst.

15. Zusammensetzung gemäß mindestens einem der Ansprüche 1 bis 12, welche ein apolares Polymer als Komponente (b) und einen Ester, einen ein- oder mehrwertigen Alkohol, ein Polyglykol, ein Keton mit höherer Kettenlänge oder eine beliebige Mischung davon als Komponente (c) umfasst.

16. Zusammensetzung gemäß mindestens einem der vorstehenden Ansprüche, welche die Komponente (c) in einer Menge von 2 bis 15 Gew.-% umfasst.

17. Geformter Artikel, hergestellt aus einer Zusammensetzung gemäß mindestens einem der Ansprüche 1 bis 16.

18. Geformter Artikel gemäß Anspruch 17, wobei mindestens ein Teil der Oberfläche des Artikels Vorsprünge und andere Aufrauungen trägt.

19. Geformter Artikel gemäß mindestens einem der Ansprüche 17 und 18 in Kombination mit einem Träger.

20. Geformter Artikel gemäß Anspruch 19, welcher entfembar mit einem Träger verbunden ist.

21. Geformter Artikel gemäß mindestens einem der Ansprüche 19 und 20, wobei der Träger aus einem nicht-adsorbierenden Material für die Komponente (a) gemacht ist.

22. Geformter Artikel gemäß mindestens einem der Ansprüche 17 bis 21, wobei mindestens ein Teil der Oberfläche des Artikels ein oder mehrere Mitglieder der Komponente (a) in schnell wirkender Form trägt.

23. Geformter Artikel gemäß Anspruch 22, wobei die Komponente (a) in schnell wirkender Form ein Insektizid oder eine ein Insektizid umfassende Zusammensetzung ohne verzögerte Freisetzung ist.

24. Geformter Artikel gemäß Anspruch 23, wobei das Insektizid DDVP ist.

25. Geformter Artikel gemäß mindestens einem der Ansprüche 17 bis 24, vorgelegt als ein manuell betreibbarer Artikel, der periodisch durch einen Tierhalter zu verwenden ist.

26. Geformter Artikel gemäß Anspruch 25 mit einer glatten Oberfläche.

27. Geformter Artikel gemäß Anspruch 25 mit gewellten, sägezahnartigen, gezackten, geriffelten, gerasteten oder in anderer Weise aufgerauten Oberfläche.

28. Geformter Artikel gemäß Anspruch 26 oder 27, kombiniert mit einem Griff, einer Aufhängevorrichtung, einem Blatt, einem Streifen oder einem Handschuh als Träger.

29. Geformter Artikel gemäß Anspruch 27 oder 28, präsentiert als ein Kamm oder als eine Bürste.

30. Geformter Artikel gemäß mindestens einem der Ansprüche 26 bis 28, präsentiert als eine Walze, einer Platte bzw. Tafel oder Handschuh zum Schlagen des Tierkörpers.

## Revendications

1. Composition à libération modifiée contenant un agent actif dans un support plastique, qui comprend
(a)
- 1 à 30 % en poids, d'un insecticide,
- 0,1 à 20 % en poids, d'un agent insectifuge, et/ou
- 0,1 à 20 % en poids, d'un agent pour soins vétérinaires,
à la condition que la quantité totale du composant (a) n'excède pas 30 % en poids,
(b) 50 à 95 % en poids, d'un polymère thermoplastique, et
(c) 1 à 22 % en poids, d'un liquide qui est incompatible avec le composant (b),
les composants (a), (b) et (c) étant choisis de manière à ce que la solubilité du composant (a) dans le composant (c) soit au moins 10 fois supérieure à la solubilité du composant (b) dans le composant (c), que le composant (a) soit pratiquement insoluble dans le composant (b) et que les composants (b) et (c) soient chimiquement inertes vis-à-vis du composant (a),
(d) éventuellement, en association avec un ou plusieurs additifs utilisables dans la transformation des polymères.

2. Composition selon la revendication 1, dans laquelle l'insecticide est un agent ayant une DL₅₀ supérieure à 50 mg/kg.

3. Composition selon la revendication 1 ou la revendication 2, qui comprend un insecticide DDVP, dipterex, perméthrine, tétraméthrine, pipéronylbutoxyde, lindène, chlordécone, bromodone, méthoxychlore, morestane, endosulfane, toxaphène, carbaryle, pirimicarb, méthiocarb, dioxacarb, promécarb, aminocarb, tétrachlorovinphos, bromophos, foxime, azidithione, diazinone, bartrine, bioterméthrine, resméthrine, alléthrine ou toute combinaison chimiquement compatible de ceux-ci.

4. Composition selon l'une quelconque des revendications 1 à 3, qui comprend en tant qu'insecticide, une combinaison de tétraméthrine, perméthrine et pipéronylbutoxyde dans un rapport pondéral de 1:2:3 à 1:8:6.

5. Composition selon l'une quelconque des revendications 1 à 4, qui comprend l'insecticide en quantité variant de 4 à 20 % en poids.

6. Composition selon la revendication 1, qui comprend en tant qu'agent insectifuge de l'huile d'eucalyptus, de l'huile d'anis, de l'huile de citron, du camphre ou toute combinaison de ceux-ci.

7. Composition selon l'une quelconque des revendications 1 à 6, qui comprend l'agent insectifuge en quantité variant de 0,5 à 10 % en poids.

8. Composition selon la revendication 1, qui comprend en tant qu'agent pour soins vétérinaires un antiphlogistique applicable par voie topique, un adoucissant dermique, un agent de conditionnement capillaire, un agent appétissant ou toute combinaison chimiquement et biologiquement compatible de ceux-ci.

9. Composition selon la revendication 1 ou la revendication 8, qui comprend un agent de conditionnement capillaire, en particulier de l'huile de vison, en tant qu'agent pour soins vétérinaires.

10. Composition selon l'une quelconque des revendications 1, 8 et 9, qui comprend l'agent pour soins vétérinaires en quantité variant de 0,5 à 10 % en poids.

11. Composition selon l'une quelconque des revendications précédentes, qui comprend en tant que composant (b), un homo-, un co- ou un ter-polymère polyoléfinique, un co- ou un ter-polymère styrène/buta-diène, un polyuréthane, un polyester, un polymère PVC ou toute combinaison chimiquement compatible de ceux-ci.

12. Composition selon l'une quelconque des revendications précédentes, qui comprend le composant (b) en quantité variant de 55 à 75 % en poids.

13. Composition selon l'une quelconque des revendications précédentes, qui comprend un polymère polaire en tant que composant (b) et une paraffine liquide ou un hydrocarbure naphtalénique, un hydrocarbure paraffinique chloré, un ester d'un alcool à au moins 15 atomes de carbone, un ester partiel de polyol, une huile de silicone, un plastifiant PVC à faible compatibilité ou tout mélange de ceux-ci, en tant que composant (c).

14. Composition selon la revendication 13, qui comprend l'huile de paraffine en tant que composant (c).

15. Composition selon l'une quelconque des revendications 1 à 12, qui comprend un polymère apolaire en tant que composant (b) et un ester, un alcool mono- ou poly-hydroxylique, un polyglycol, une cétone à longue chaîne ou tout mélange de ceux-ci, en tant que composant (c).

16. Composition selon l'une quelconque des revendications précédentes, qui comprend le composant (c) en quantité variant de 2 à 15 % en poids.

17. Article formé fait d'une composition selon l'une quelconque des revendications 1 à 16.

18. Article formé selon la revendication 17, dans lequel au moins une partie de la surface dudit article porte des protrusions ou autres aspérités.

19. Article formé selon l'une quelconque des revendications 17 et 18, associé à un support.

20. Article formé selon la revendication 19, associé de manière amovible à un support.

21. Article formé selon l'une quelconque des revendications 19 et 20, dans lequel le support est fait d'un matériau non-adsorbant pour le composant (a).

22. Article formé selon l'une quelconque des revendications 17 à 21, dans lequel au moins une partie de la surface dudit article porte un ou plusieurs membres du composant (a) sous une forme « à action rapide ».

23. Article formé selon la revendication 22, dans lequel le composant (a) sous une forme « à action rapide » est un insecticide ou une composition à libération non-modifiée comprenant un insecticide.

24. Article formé selon la revendication 23, dans lequel l'insecticide est le DDVP.

25. Article formé selon l'une quelconque des revendications 17 à 24, présenté sous la forme d'un article à mise en oeuvre manuelle, destiné à être employé périodiquement par un éleveur d'animaux.

26. Article formé selon la revendication 25, ayant une surface lisse.

27. Article formé selon la revendication 25, ayant une surface ondulée, en dents de scie, dentée, feuilletée, rainurée ou rendue rugueuse de toute autre manière.

28. Article formé selon la revendication 26 ou la revendication 27, associé à une poignée, à des moyens de suspension, à une feuille, à une bande ou à un gant en tant que support.

29. Article formé selon la revendication 27 ou la revendication 28, présenté sous la forme d'un peigne ou d'une brosse.

30. Article formé selon l'une quelconque des revendications 26 à 28, présenté sous la forme d'un rouleau, d'une plaque ou d'un gant, destiné à être passé sur le corps d'un animal.
